# EUROPÄISCHE PATENTSCHRIFT

(11) **EP 0 950 818 B1**
(45) Veröffentlichungstag und Bekanntmachung des Hinweises auf die Patenterteilung: **18.02.2004**
(21) Anmeldenummer: 99107168.9
(22) Anmeldetag: 13.04.1999
(51) Int. Cl.: F16B 7/18

(54) **Verbindungsvorrichtung für Gewindestiftenden**
Fastening device for threaded ends of rods
Dispositif de fixation pour extrémités filetées de tiges

(30) Priorität: 14.04.1998 DE 19816194
(43) Veröffentlichungstag der Anmeldung: 20.10.1999
(73) Patentinhaber: Deutsches Zentrum für Luft- und Raumfahrt e.V., 53175 Bonn (DE)
(72) Erfinder: Schütze, Rainer, Dr., 38110 Braunschweig (DE)
(74) Vertreter: Einsel, Martin, Dipl.-Phys.

(56) Entgegenhaltungen:
- DE-A- 3 210 007
- DE-B- 1 046 410
- FR-A- 2 130 020
- FR-A- 2 207 232
- FR-A- 2 697 555

## Beschreibung

Die Erfindung betrifft eine Verbindungsvorrichtung für zwei koaxial einander gegenüberstehende, nicht drehbare Gewindestiftenden, wobei ein in wenigstens einer Axialebene geteiltes Verbindungselement und Mittel zum Verspannen des geteilten Verbindungselements vorgesehen sind.

Verbindungsvorrichtungen für nicht drehfeste Gewindestifte sind in unterschiedlichster Ausgestaltung bekannt. Beispielsweise ist in der DE 41 35 695 C2 ein Stab mit einer rohrförmigen Wandung aus Faserverbundwerkstoff und beidseitig angeordnetem Anschlußelement beschrieben.

Zur Verschraubung zweier einzelner Stäbe oder dergleichen mit drehfesten Gewindeanschlüssen sind hingegen besondere Verbindungsmittel zu verwenden. Diese Problematik tritt beispielsweise beim Verbinden von Fachwerkstrukturen, insbesondere Fachwerkträgern, auf, deren Gurtstäbe miteinander verschraubt werden sollen. Ein ähnliches Problem ergibt sich auch, wenn einzelne Stäbe in einem demontierbaren Fachwerk ausgetauscht werden müssen, ohne das gesamte Fachwerk abbauen zu müssen.

In beiden Fällen müssen Verschraubungen verwendet werden, die eine Montage auch von der Seite her und nicht nur in Achsrichtung erlauben. Möglich ist dies beispielsweise mit einer Verschraubung, die durch Überwurfmuttern erfolgt. Dazu werden die Enden der beiden Verbindungsstäbe mit tellerartigen Ein-Einschraubteilen versehen. Die Überwurfmutter befindet sich hinter einem Teller und übergreift diesen, während sie auf den anderen Teller, der zu diesem Zweck mit einem Außengewinde ausgestattet ist, aufgeschraubt wird. Jede Verschraubung dieser Art benötigt neben einer Überwurfmutter zwei tellerartige Einschraubteile, von denen wenigstens eines zur Längenänderung mit einer Kontermutter ausgestattet sein muß. Im Fall des einzelnen Stabes, der in ein vorhandenes Fachwerk eingefügt wird, sind diese drei Verbindungselemente beidseitig erforderlich. Durch die relativ vielen und auch voluminösen Einzelteile erfordern solche Verschraubungen einen hohen Gewichts- wie auch Fertigungsaufwand.

Aus der GB 2 239 070 A ist eine Mutter mit Schraubgewinde bekannt, die aus zwei in einer Axialebene geteilten Mutterhälften und einer die beiden Hälften umfassenden Kappe besteht. Dabei weist die Kappe einen Radialschlitz mit einer lichten Weite größer gleich dem Durchmesser einer zur Mutter passenden Gewindestange auf. Die beiden Mutterhälften weisen einen Abschnitt, der zusammengefügt ein Sechskant zur Handhabung der Schraube mittels Maulschlüssel ergibt, und einen zylinderischen Abschnitt auf, der zur Umschließung mit der Kappe dient. Mit dieser Vorrichtung ist es möglich, eine Mutter auf einen Gewindestangenabschnitt anzubringen, ohne daß wenigstens ein Ende der Gewindestange zugänglich ist. Mit dieser Vorrichtung ist jedoch ein sicheres Verbinden zweier einander gegenüberstehenden, nicht drehbaren Gewindestiftenden nicht möglich.

Aus der FR 2 697 555 A1 ist eine mechanische Betonstahlverbindung bekannt. Zwei Halbschalen bilden ein in der Axialebene geteiltes Verbindungselement und umschließen die Enden von zwei Stiftelementen, die miteinander verbunden werden sollen. Die Gesamtkonzeption soll einen Formschluss im Beton ermöglichen.

Aufgabe der Erfindung ist es also, eine Verbindungsvorrichtung für einander gegenüberstehende, nicht drehbare Gewindestiftenden anzugeben, die eine einfach zu handhabende, sichere und möglichst kleinbauende Verbindung schafft.

Gelöst wird diese Aufgabe mit einer Verbindungsvorrichtung für den eingangs genannten Zweck mit den Merkmalen nach Anspruch 1.

Die einzelnen Teile des Verbindungselementes können von der Seite her auf die einander gegenüberstehenden Gewindestiftenden aufgelegt werden, wobei die Innenseite der Verbindungselementteile ein zu den Gewindestiftenden passendes Gewinde aufweisen. Nach dem Verspannen der Verbindungselementteile umschließen diese die beiden Gewindestiftenden formschlüssig und bilden somit eine sichere auf Druck und Zug belastbare Verbindung, wie bei herkömmlich eingeschraubten Verbindungsvorrichtungen.

Generell kann das Verbindungselement mehrteilig, beispielsweise drei- oder vierteilig, ausgebildet sein. Insbesondere werden der Handhabungs- und Fertigungsaufwand mit einem zweiteiligen Verbindungselement gering gehalten.

Dadurch, daß die Mittel zum Verspannen des Verbindungselements zwei mit Innenkonus versehene Elemente aufweisen und am Verbindungselement daran angepasste konische Enden vorgesehen sind, wobei die Elemente mit ihren Innenkonen axial aufeinander zu belastet auf den Außenkonen des Verbindungselements sitzen, wird eine funktionssichere und einfache Verspannung der Verbindungselementteile auf den Gewindestiftenden erreicht.

Wenn ein mit Innenkonus versehenes Element eine Scheibe oder Mutter ist, die auf einem Gewindestiftende mit dem Innenkonus auswärts zeigend aufgesteckt bzw. aufgeschraubt ist, und das andere mit Innenkonus versehene Element eine Mutter ist, die am anderen Gewindestiftende mit dem Innenkonus relativ zu diesem Gewindestiftende auswärts zeigend aufgeschraubt ist, wird ein schrittweiser Aufbau der Verbindungsvorrichtung von dem Fußende eines Gewindestiftendes zum anderen Gewindestiftende ermöglicht.

Bevorzugt ist die Innenkonusmutter am anderen Gewindestiftende mit einer Kontermutter gesichert.

Dadurch, daß die beiden Gewindestiftenden unterschiedliche Gewinde aufweisen, wobei im Verbindungselement zwei den jeweiligen umschlossenen Gewinden angepaßte Zonen ausgebildet sind, kann eine kontinuierliche Verstellbarkeit des Abstandes der einander gegenüberstehenden Gewindestiftenden durch Verdrehen des Verbindungselementes erreicht werden.

Alternativ oder ergänzend können die beiden Gewindestiftenden unterschiedliche Gewindesteigungen aufweisen oder aus einem Rechtsgewinde und einem Linksgewinde bestehen. Bei gleicher Gewinderichtung und unterschiedlicher Gewindesteigung wird eine besonders feine Einstellungsmöglichkeit des Abstandes erreicht, wobei sich bei einer Ausführungsform mit Rechts- und Linksgewinde bei einer Verdrehung des Verbindungselementes der Abstand zwischen den Gewindestiftenden mit der aufaddierten Gewindesteigung beider Seiten verändert.

Um beidseits die für die erforderliche Kraftübertragung ausreichende Anzahl von in Eingriff stehenden Gewindegängen sicherzustellen, sollten die beiden den jeweiligen umschlossenen Gewinden angepaßten Zonen im Verbindungselement hälftig ausgebildet werden. Um am Übergangsbereich zwischen den beiden Zonen eine Beschädigung der Gewindegänge sowohl der Gewindestiftenden wie auch des Verbindungselementes zu vermeiden, wird bevorzugt mittig des Verbindungselementes ein vorspringender, gewindeloser Abschnitt belassen.

Wenn das Verbindungselement ein Außensechskant aufweist, kann das um die Gewindestiftenden zusammengesetzte Verbindungselement mit einem gewöhnlichen Maulschlüssel auf dem Gewinde der Gewindestiftenden in Art einer Mutter verdreht werden und insbesondere mit der mit Innenkonus versehenen Scheibe verspannt werden.

Für eine ungehinderte Handhabung ist das Sechskant mittig am Element angeordnet.

Zur Verminderung des Gewichts der Verbindungsvorrichtung ist es bevorzugt, daß das Verbindungselement und/oder die Mittel zum Verspannen aus Aluminium oder einer Aluminiumlegierung hergestellt sind.

Nachfolgend wird ein Ausführungsbeispiel der Erfindung unter Bezugnahme auf die beiliegenden Zeichnungen detailliert beschrieben.

Darin zeigt:
- Fig. 1: eine montierte, erfindungsgemäße Verbindungsvorrichtung in teils geschnittener Ansicht,
- Fig. 2: einen Querschnitt entlang der in Fig. 1 dargestellten Linie II - II und
- Fig. 3: eine Ansicht der Verbindungsvorrichtung in teilmontiertem Zustand.

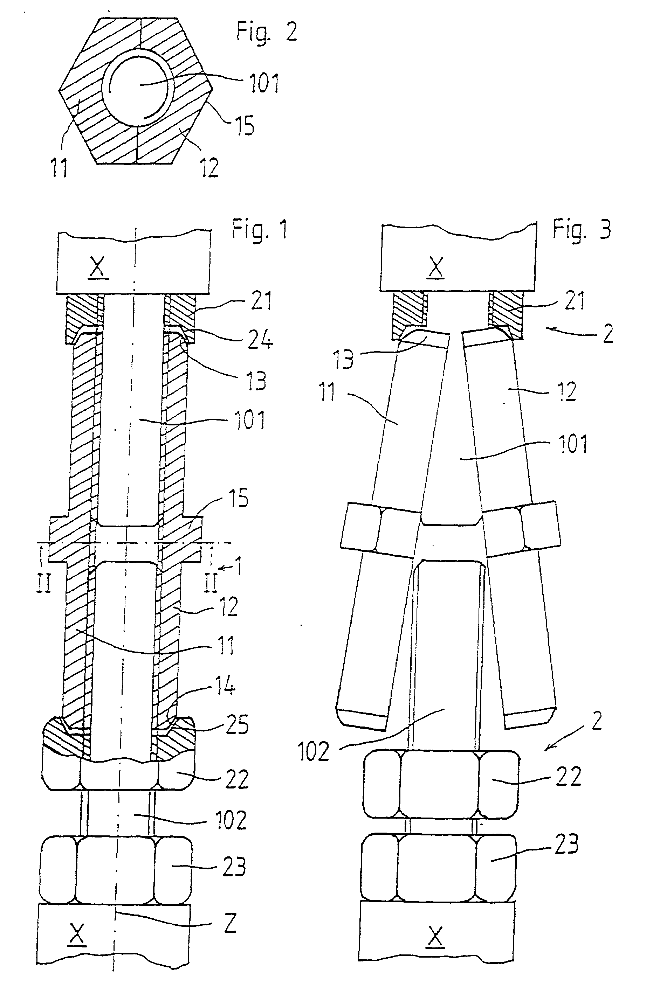

In Fig. 1 sind zwei lediglich angedeutete Fachwerkträger X dargestellt, die mit ihren Stirnflächen einander gegenüberstehen. In den Stirnflächen sind koaxial zueinander angeordnete Gewindestiftenden 101, 102 befestigt. Die koaxial zur Achse Z einander gegenüberstehenden Gewindestiftenden 101, 102 sind an den Fachwerkträgern X drehfest befestigt. Ebenso sind die Fachwerkträger X nicht um Achse Z drehbar. Folglich bedarf es einer besonderen Verbindungsvorrichtung, um die beiden einander gegenüberstehenden Gewindestiftenden 101, 102 miteinander zu verbinden.

Zur Verbindung der beiden Gewindestiftenden 101, 102 ist ein Verbindungselement 1 vorgesehen, das die Gewindestiftenden umschließt. Das Verbindungselement 1 ist im dargestellten Ausführungsbeispiel aus zwei Teilen 11, 12 aufgebaut, wobei das Verbindungselement 1 dabei entlang einer Axialebene in zwei identische Halbschalen 11, 12, wie in Fig. 2 und 3 ersichtlich, aufgeteilt ist. Die halbschalenförmigen Teile 11, 12 weisen auf der hohlzylindrischen Innenseite ein zum Gewinde der Gewindestiftenden 101, 102 passendes Gewinde auf. Im dargestellten Ausführungsbeispiel haben beide Gewindestiftenden 101, 102 ein metrisches Rechtsgewinde.

Ebenso ist es denkbar, daß die beiden Gewindestiftenden 101, 102 unterschiedliche Gewinde aufweisen. Beispielsweise kann ein Gewindestiftende ein metrisches Gewinde und das andere Ende ein Feingewinde gleicher Richtung aufweisen. Bei dann mit entsprechend passenden Innengewinde ausgebildetem Verbindungselement 1 kann durch Verdrehen des Verbindungselements 1 auf den feststehenden Gewindestiftenden 101, 102 der Abstand zwischen den Gewindestiftenden 101, 102 kontinuierlich und fein verstellt werden.

Ebenso ist es möglich, daß die Gewindestiftenden 101, 102 unterschiedliche Gewinderichtung aufweisen, so daß wiederum bei einem entsprechend angepaßten Verbindungselement 1 durch Verdrehen des Verbindungselementes 1 auf den feststehenden Gewindestiftenden 101, 102 der Abstand zwischen den gegenüberstehenden Gewindestiftenden 101, 102 je nach Drehrichtung des Verbindungselementes 1 durch das Links- und Rechtsgewinde vergrößert oder verkleinert werden kann.

Bei dieser Ausführungsform sollte zum Schutz der Gewindegänge sowohl der Gewindestiftenden 101, 102 wie auch der Innengewinde des Verbindungselementes 1 ein kurzer, gewindeloser Abschnitt in der Mitte des Verbindungelementes vorgesehen werden. Dieser Abschnitt würde dann die maximale Einschraubtiefe für beide Seiten begrenzen und ein Hineindrehen des "falschen" Gewindes vermeiden. Um eine größere Verstellmöglichkeit in axialer Richtung zu erreichen, sollte das Element 21 als Mutter ausgebildet sein. Zusätzlich kann auch an diesem Ende zur spielfreien Einstellung der Verbindung eine Kontermutter vorgesehen werden.

Im dargestellten Ausführungsbeispiel mit gleichgerichtetem metrischem Gewinde ist ein derartiger Anschlag nicht erforderlich. Dahingegen kann der Abstand der einander gegenüberstehenden Gewindestifte nur entsprechend der Gewindeteilung diskontinuierlich gewählt werden.

Das aus den beiden Halbschalen 11, 12 aufgebaute hohlzylindrisch ausgebildete Verbindungselement 1 weist beidseits konische Enden 13, 14 auf. Etwa mittig des Verbindungselementes 1 ist senkrecht zur Symmetrie- oder Drehachse Z ein Sechskant 15 auf der äußeren, zylindrischen Umfangfläche der beiden Teile 11, 12 angeformt.

Auf dem einen Gewindestiftende 101 ist eine Scheibe oder Mutter 21 an der Stirnfläche des zugehörigen Fachwerkträgers X anliegend angeordnet. Die andere Seite der Scheibe oder Mutter 21 weist einen in der Scheiben-/Gewindebohrung ausgebildeten Innenkonus 24 auf. In den zwischen Innenkonus 24 der Scheibe oder Mutter 21 und dem Gewindestiftende 101 ausgebildeten Ringspalt ist das Verbindungselement 1 mit seinem konischen Ende 13 eingesetzt und durch Einschrauben des Verbindungselementes 1, gegebenenfalls unter Zuhilfenahme eines an den Sechskant 15 angesetzten Maulschlüssels verspannt. Im dargestellten Ausführungsbeispiel ist eine Mutter 21 auf dem Gewindestiftende 101 aufgeschraubt. Alternativ könnte Bezugszeichen 21 jedoch auch eine Scheibe bezeichnen, die auf dem Gewindestiftende 101 lediglich aufgesteckt ist.

Am zweiten, gegenüberliegenden Gewindestiftende 102 sind zwei Muttern 22, 23 auf dem Gewindestiftende 102 aufgeschraubt. Die näher zum freien Ende des Gewindestiftendes 102 angeordnete Mutter 22 weist in ihrer Gewindebohrung an ihrer Außenseite einen Innenkonus 25 auf. Durch Abschrauben der Mutter 22 setzt sich das konische Ende 14 des Verbindungselementes 1 in den zwischen Mutter 22 und Gewindestiftende 102 durch den Innenkonus 25 ausgebildeten Ringspalt und verspannt die beiden Teile 11, 12 des Verbindungselementes 1.

Die Kontermutter 23 ist auf dem Gewindestiftende 102 zwischen Mutter 22 und Stirnfläche des Fachwerkträgers X angeordnet. Sie beseitigt das Spiel zwischen Gewindestiftende 102 und Träger X. Dadurch wird die Gesamtlänge des Bereiches zwischen den Abschnitten des Trägers X einstellbar. Ein Kontern der beiden Muttern 22, 23 ist nicht erforderlich, da die Mutter 22 ja schon gegen das Verbindungselement 11 kontert.

In Fig. 3 ist die Verbindungsvorrichtung in teilmontiertem Zustand dargestellt. Die beiden Halbschalen 11, 12 des Verbindungselementes 1 sind in den Innenkonus 24 der Scheibe 21 mit ihrem konischen Ende leicht eingeschraubt. Die beiden koaxial einander gegenüberstehenden Gewindestiftenden 101, 102 sind von dem Verbindungselement 1 noch nicht umschlossen.

Nachfolgend wird der Montagevorgang mit einer derartigen Verbindungsvorrichtung erläutert.

Bei zwei zu verbindenden Fachwerkträgem X mit zwei koaxial einander gegenüberstehenden Gewindestiftenden 101, 102 wird zunächst auf einem Gewindestiftende 101 eine Scheibe 21 mit nach außen zeigendem Innenkonus 24 aufgesteckt. Auf das zweite Gewindestiftende 102 wird zunächst die Kontermutter 23 und nachfolgend die Mutter 22 mit ebenfalls nach außen zeigendem Innenkonus 24 aufgeschraubt.

Nun werden die beiden Halbschalen 11, 12 des Verbindungselementes 1 in radialer Richtung die beiden Gewindestiftenden 101, 102 umschließend aufgelegt. Die bereits aufgeschraubte bzw. aufgesteckte Mutter 22 mit Innenkonus 25 und Scheibe 21 mit Innenkonus 24 passen auf die konischen Enden 13, 14 des Verbindungselementes 1. Somit bildet das Verbindungselement 1 eine zweiteilige, langgestreckte Mutter, wobei die beiden Muttemhälften 11, 12 an ihren Enden mit der Konusklemmung zusammengehalten werden.

Mit der in Fig. 1 dargestellten Anordnung mit einer zusätzlichen Kontermutter 23 kann die Verbindung spielfrei eingestellt werden und eine definierte Länge vorgegeben werden. Die Länge des Verbindungselementes 1 ist an die Gegebenheiten anzupassen, wobei die Anzahl der in Eingriff stehenden Gewindegänge für die erforderliche Kraftübertragung ausreichend gewählt sein müssen.

Für den Fall eines seitlich in ein räumliches Fachwerk zu montierenden Stabes genügt es, das erfindungsgemäße Verbindungselement nur auf einer Stabseite vorzusehen. Der einzusetzende Stab wird zunächst an einem Ende in herkömmlicher Weise mit der Umgebungsstruktur verschraubt, wo hingegen auf der zweiten Seite des Stabes der Gewindestift, der später vom Verbindungselement 1 umschlossen wird, in den Stab eingeschraubt wird und nach dem Verschrauben des Stabes mit der Umgebungsstruktur bis auf den Gegenstift herausgeschraubt wird. Beide Gewindestiftenden 101, 102, Stift und Gegenstift, werden dann mit dem geteilten Verbindungselement in oben beschriebener Weise verbunden.

Femer kann das erfindungsgemäße Verbindungselement bei nicht seitlicher Montage auch als hochbelastbare Schnellverbindung benutzt werden. In diesem Fall wird das geteilte Verbindungselement 1 soweit in den Innenkonus 24 der Scheibe 21 auf dem Gewindestiftende 101 eingeschraubt, daß die beiden Halbschalen gerade nicht herausfallen, sich aber dennoch soweit öffnen lassen, daß das Gewindestiftende eines Fachwerkträgers hineingesteckt werden kann. Dieser Zustand ist in Fig. 3 dargestellt. Anschließend werden die Halbschalen 11, 12 zusammengedrückt und vollständig in den Konus der Scheibe 21 eingeschraubt. Die Mutter 22 mit Innenkonus 25 wird danach auf das Konusende 14 des Verbindungselementes 1 geschraubt und mit der Kontermutter 23 gekontert.

Zur Verminderung des Gewichts der Verbindungsvorrichtung sind bevorzugt das Verbindungselement 1 sowie die Mittel zum Verspannen 2 aus Aluminium oder einer Aluminiumlegierung hergestellt.

### Bezugszeichenliste

- 1: Verbindungselement
- 11: erstes Teil, Halbschale
- 12: zweites Teil, Halbschale
- 13: Außenkonus
- 14: Außenkonus
- 15: Sechskant

- 2: Mittel zum Verspannen
- 21: Scheibe oder Mutter
- 22: Mutter
- 23: Kontermutter
- 24: Innenkonus
- 25: Innenkonus

- 101: Gewindestiftende
- 102: Gewindestiftende

- X: Fachwerkträger
- Z: Achse

## Patentansprüche

1. Verbindungsvorrichtung mit zwei koaxial einander gegenüberstehenden, nicht drehbaren Gewindestiftenden (101, 102),
wobei ein in wenigstens einer Axialebene geteiltes Verbindungselement (1) und Mittel (2) zum Verspannen des geteilten Verbindungselements (1) vorgesehen sind,
wobei das verspannte Verbindungselement (1) die Gewindestiftenden (101, 102) formschlüssig umschließt.;
wobei die Mittel (2) zum Verspannen des Verbindungselements zwei mit Innenkonus (24, 25) versehene Elemente (21, 22) aufweisen und
am Verbindungselement (1) an die mit Innenkonus versehenen Elemente angepasste konische Enden (13, 14) vorgesehen sind,
**dadurch gekennzeichnet, dass** die Elemente (21, 22) mit ihren Innenkonen (24, 25) axial aufeinander zu belastet auf den Außenkonen (13, 14) des Verbindungselements sitzen,
**dass** ein mit Innenkonus (24) versehenes Element (21) eine Scheibe oder Mutter ist, die auf einem Gewindestiftende (101) mit dem Innenkonus (24) auswärts zeigend aufgesteckt bzw. aufgeschraubt ist, und
dass das andere mit Innenkonus (25) versehene Element eine Mutter (22) ist, die am anderen Gewindestiftende (102) mit dem Innenkonus (25) auswärts zeigend aufgeschraubt ist.

2. Verbindungsvorrichtung nach Anspruch 1,
**dadurch gekennzeichnet,**
**dass** das Verbindungselement (1, 11, 12) zweiteilig ist.

3. Verbindungsvorrichtung nach Anspruch 1 oder 2,
**dadurch gekennzeichnet,**
**dass** am anderen Gewindestiftende (102) vor der Innenkonusmutter (22) eine Kontermutter (23) aufgeschraubt ist.

4. Verbindungsvorrichtung nach einem der vorangehenden Ansprüche,
**dadurch gekennzeichnet,**
**dass** die beiden Gewindestiftenden (101, 102) unterschiedliche Gewinde aufweisen, wobei im Verbindungselement (1) zwei den jeweiligen umschlossenen Gewinden angepaßte Zonen ausgebildet sind.

5. Verbindungsvorrichtung nach Anspruch 4,
**dadurch gekennzeichnet,**
**dass** die beiden Gewindestiftenden (101, 102) zwei unterschiedliche Gewindesteigungen aufweisen.

6. Verbindungsvorrichtung nach Anspruch 4 der 5,
**dadurch gekennzeichnet,**
**dass** ein Gewindestiftende (101 oder 102) ein Rechtsgewinde und das andere Gewindestiftende (102 oder 101) ein Linksgewinde haben.

7. Verbindungsvorrichtung nach Anspruch 4, 5 oder 6,
**dadurch gekennzeichnet,**
**dass** zwischen den den jeweiligen umschlossenen Gewinden angepaßten Zonen im Verbindungselement (1) ein kurzer vorspringender, gewindeloser Bereich in Längsrichtung in der Mitte des Verbindungselementes (1) vorgesehen ist.

8. Verbindungsvorrichtung nach einem der vorangehenden Ansprüche,
**dadurch gekennzeichnet,**
**dass** das Verbindungselement (1) ein Außensechskant (15) aufweist.

9. Verbindungsvorrichtung nach Anspruch 4,
**dadurch gekennzeichnet,**
**dass** das Außensechskant (15) mittig am Element (1) angeordnet ist.

10. Verbindungsvorrichtung nach einem der vorangehenden Ansprüche,
**dadurch gekennzeichnet,**
**dass** das Verbindungselement (1) und/oder die Mittel (2) zum Verspannen aus Aluminium oder einer Aluminiumlegierung hergestellt sind.

## Claims

1. A connecting device incorporating two coaxial, mutually opposed, non-rotatable ends of respective threaded rods (101, 102),
wherein there are provided a connecting element (1) which is divided along at least one axial plane and means (2) for clamping the divided connecting element (1),
wherein the clamped connecting element (1) surrounds the ends of the threaded rods (101, 102) in form-fitting manner;
wherein the means (2) for clamping the connecting element comprise two elements (21, 22) which are provided with an internal cone (24, 25) and
the connecting element (1) is provided with conical ends (13, 14) which match the elements provided with internal cones,
**characterized**
**in that** the internal cones (24, 25) of the elements (21, 22) are seated on the external cones (13, 14) of the connecting element such as to be loaded together in the axial direction,
**in that** one of the elements (21) provided with an internal cone (24) is a washer or a nut which is placed on or screwed onto an end of one of the threaded rods (101) with the internal cone (24) pointing outwardly, and
**in that** the other element provided with an internal cone (25) is a nut (22) which is screwed on to the end of the other threaded rod (102) with the internal cone (25) pointing outwardly.

2. A connecting device in accordance with Claim 1,
**characterized**
**in that** the connecting element (1, 11, 12) is a two-piece element.

3. A connecting device in accordance with Claim 1 or 2,
**characterized**
**in that** a lock nut (23) is screwed onto the end of the other threaded rod (102) before the internally coned nut (22).

4. A connecting device in accordance with any of the preceding Claims,
**characterized**
**in that** the ends of the two threaded rods (101, 102) have different threads, whereby two zones matching the respectively surrounded threads are formed in the connecting element (1).

5. A connecting device in accordance with Claim 4,
**characterized**
**in that** the ends of the two threaded rods (101, 102) have two different thread pitches.

6. A connecting device in accordance with Claim 4 or 5,
**characterized**
**in that** the end of one of the threaded rods (101 or 102) has a right-hand thread and the end of the other threaded rod (102 or 101) has a left-hand thread.

7. A connecting device in accordance with Claim 4, 5 or 6,
**characterized**
**in that** a short, protruding, longitudinally extending threadless region is provided at the centre of the connecting element (1) between the zones in the connecting element (1) which match the respectively surrounded threads.

8. A connecting device in accordance with any of the preceding Claims,
**characterized**
**in that** the connecting element has (1) an external hexagonal edge (15).

9. A connecting device in accordance with Claim 4,
**characterized**
**in that** the external hexagonal edge (15) is arranged centrally of the element (1).

10. A connecting device in accordance with any of the preceding Claims,
**characterized**
**in that** the connecting element (1) and/or the means (2) for producing the clamping effect are made of aluminium or an aluminium alloy.

## Revendications

1. Dispositif d'assemblage de deux extrémités de tiges filetées (101, 102) non mobiles en rotation et situées l'une en face de l'autre de façon coaxiale,
dans lequel un élément d'assemblage (1) divisé sur au moins un plan axial et des moyens (2) pour haubaner l'élément d'assemblage (1) divisé sont prévus,
l'élément d'assemblage (1) haubané entourant les extrémités de tiges filetées (101, 102) par complémentarité des formes ,
dans lequel les moyens (2) pour haubaner l'élément d'assemblage comportent deux éléments (21, 22) équipés de cône intérieur (24, 25) et sur l'élément d'assemblage (1) sont prévues des extrémités (13, 14) coniques adaptées aux éléments équipés de cône intérieur,
**caractérisé en ce que** les éléments (21, 22) reposent avec leur cône intérieur (24, 25) sollicités de façon axiale l'un sur l'autre sur les cônes extérieurs (13, 14) de l'élément d'assemblage, **en ce qu'**un élément (21) équipé de cône intérieur (24) est une rondelle ou un écrou, qui est vissé ou implanté sur une extrémité de la tige filetée (101) avec le cône intérieur (24) en pointant vers l'extérieur et **en ce que** l'autre élément équipé de cône intérieur est un écrou (22) qui est vissé à l'autre extrémité de la tige filetée (102) avec le cône intérieur (25) en pointant vers l'extérieur.

2. Dispositif d'assemblage selon la revendication 1, **caractérisé en ce que** l'élément d'assemblage (1, 11, 12) est en deux parties.

3. Dispositif d'assemblage selon la revendication 1 ou 2, **caractérisé en ce qu'**à l'autre extrémité de la tige filetée (102) avant l'écrou de cône intérieur (22) est vissé un contre-écrou (23).

4. Dispositif d'assemblage selon l'une quelconque des revendications précédentes, **caractérisé en ce que** les deux extrémités de tiges filetées (101, 102) présentent différents filetages, deux zones adaptées aux filetages respectifs formant l'entourage étant conçues dans l'élément d'assemblage (1.)

5. Dispositif d'assemblage selon la revendication 4, **caractérisé en ce que** les deux extrémités de tiges filetées (101, 102) présentent deux pas de filetage différents.

6. Dispositif d'assemblage selon la revendication 4 ou 5, **caractérisé en ce qu'**une extrémité de tige filetée (101 ou 102) a un filetage à droite et que l'autre extrémité de tige filetée (102 ou 101) a un filetage à gauche.

7. Dispositif d'assemblage selon la revendication 4, 5 ou 6, **caractérisé en ce que**, entre les zones adaptées aux filetages formant l'entourage dans l'élément d'assemblage (1), une zone sans filetage formant une courte saillie est prévue en direction longitudinale au milieu de l'élément d'assemblage (1).

8. Dispositif d'assemblage selon l'une quelconque des revendications précédentes, **caractérisé en ce que** l'élément d'assemblage (1) présente un hexagone extérieur (15).

9. Dispositif d'assemblage selon la revendication 4, **caractérisé en ce que** l'hexagone extérieur (15) est disposé au milieu de l'élément (1).

10. Dispositif d'assemblage selon l'une quelconque des revendications précédentes, **caractérisé en ce que** l'élément d'assemblage (1) et/ou les moyens (2) pour haubaner sont fabriqués en aluminium ou en alliage d'aluminium.
